# EUROPEAN PATENT APPLICATION

(11) **EP 2 525 252 A1**
(43) Date of publication of application: **21.11.2012**
(21) Application number: 10842984.6
(22) Date of filing: 10.11.2010
(51) Int. Cl.: G02F 1/1337, G02F 1/1333, G02F 1/1339

(54) **LIQUID CRYSTAL DISPLAY DEVICE AND MANUFACTURING METHOD THEREFOR**

(30) Priority: 12.01.2010 JP 2010004236
(71) Applicant: Sharp Kabushiki Kaisha, Osaka-shi, Osaka 545-8522 (JP)
(72) Inventor: MORIWAKI, Hiroyuki, Osaka-shi, Osaka 545 - 8522 (JP); KANZAKI, Yohsuke, Osaka-shi, Osaka 545 - 8522 (JP)
(74) Representative: Müller - Hoffmann & Partner
(86) International application number: PCT/JP2010/006610
(87) International publication number: WO 2011/086624

(57) **Abstract**

In the disclosed liquid crystal display device, alignment films, each extending from a pixel region to a frame region, are formed on a surface of a first substrate facing a liquid crystal layer and a surface of a second substrate facing the liquid crystal layer, respectively, by curing an alignment film material having fluidity. At least one of the first substrate or the second substrate includes a support substrate, and a support structure formed on the support substrate, at least a surface of the support substrate opposite the support substrate being directly covered with the alignment film. The support structure has a side portion formed in such a manner that a tangent plane on the side portion is inclined outward relative to the support structure toward the support substrate. The side portion of the support structure is located in the frame region, and supports an edge of the alignment film.

## Description

### TECHNICAL FIELD

The present invention relates to liquid crystal display devices and a method for fabricating the same, particularly to control of application of an alignment film.

### BACKGROUND ART

In general, a liquid crystal display device includes a liquid crystal layer sealed between a pair of substrates. One of the paired substrates is a TFT substrate including a plurality of gate lines, a plurality of source lines, a plurality of pixel electrodes, a plurality of TFTs, etc. The other substrate is a counter substrate including a common electrode corresponding to the plurality of pixel electrodes. The liquid crystal layer is sealed with a frame-shaped sealing member surrounding the liquid crystal layer between the TFT substrate and the counter substrate.

Each of the pair of substrates includes a pixel region as a display region, and a frame region as a non-display region surrounding the pixel region. A frame region of the TFT substrate includes a sealing member region for forming the sealing member, and a terminal region outside the sealing member region. A plurality of terminals for supplying signals to the pixel region are formed in the terminal region.

Each of the TFT substrate and the counter substrate includes an alignment film formed on a surface facing the liquid crystal layer to control orientation of liquid crystal molecules in the liquid crystal layer. The alignment film is made of a resin film, such as a polyimide film, and rubbing or photo-alignment has been performed on a surface thereof.

The alignment film is formed by applying liquid polyimide on the surfaces of the TFT substrate and the counter substrate, and baking the liquid polyimide to cure. The polyimide may be applied by flexography, ink jet printing, etc.

In forming the alignment film by the ink jet printing, viscosity of an alignment film material such as polyimide needs to be relatively low so that drops of the alignment film material discharged toward the substrate and hit on the substrate can sufficiently spread on the surface of the substrate.

The low viscosity alignment film material can smoothly spread on the surface of the substrate, and the alignment film material may unnecessarily spread to the frame region. When the alignment film material reaches the terminal region in the frame region, the terminals are covered with the alignment film which is an insulating film. This inhibits conduction between the terminals and circuit chips connected to the terminals.

Patent Documents 1 and 2 propose a technique of preventing the excessive spread of the alignment film material by forming a groove in the TFT substrate between the sealing member region and the pixel region which contributes to display so that the groove can hold the alignment film material.

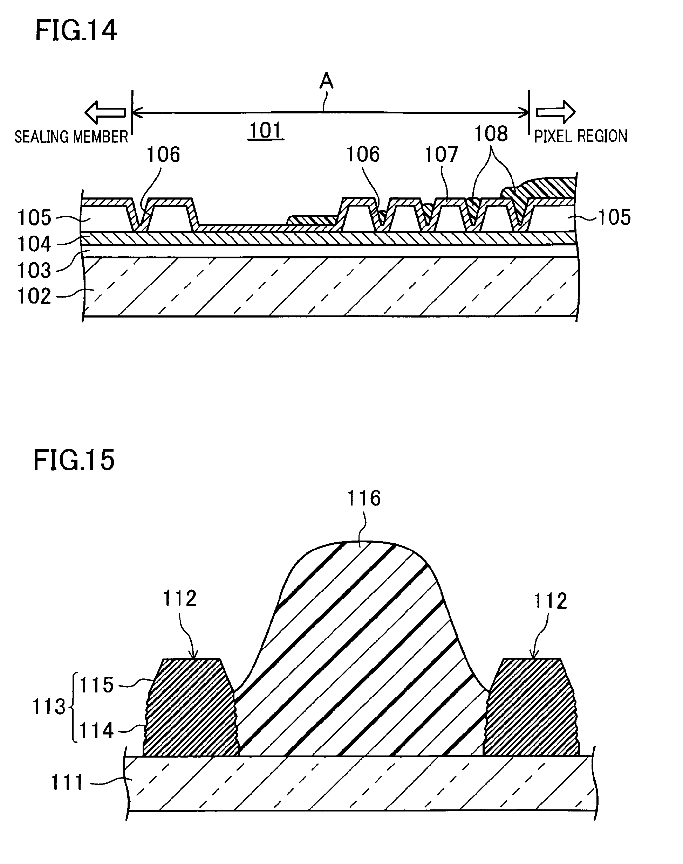

For example, as shown in a cross-sectional view of FIG. 14, a TFT substrate 101 disclosed by Patent Document 2 includes a glass substrate 102, and a gate insulating film 103, a wiring layer 104, and an insulating layer 105 are sequentially formed on the surface of the glass substrate. A plurality of recessed grooves 106 are formed in the insulating layer 105 to extend parallel to each other. Referring to FIG. 14, when a liquid alignment film material 108 flows from the pixel region on the right (not shown) to the sealing member on the left (not shown), the alignment film material 108 is held in at least one of the plurality of recessed grooves 106.

According to Patent Document 3, a color filter is formed by ink jet printing. As shown in a cross-sectional view of FIG. 15, a plurality of water-repellent banks 112 are formed on a support substrate 111, and a rough surface 114 closer to the support substrate 111 and a smooth surface 115 closer to a tip end of the bank 112 are provided on a side surface 113 of each of the banks 112. Then, ink 116 is applied to a region between the adjacent banks 112 to prevent mixing of ink 116 applied to adjacent regions.

### CITATION LIST

### PATENT DOCUMENTS

[Patent Document 1] Japanese Patent Publication No. 2004-361623
[Patent Document 2] Japanese Patent Publication No. 2007-322627
[Patent Document 3] Japanese Patent Publication No. 2008-046306

### SUMMARY OF THE INVENTION

### TECHNICAL PROBLEM

When the plurality of recessed grooves are formed to hold the alignment film material therein as described in Patent Documents 1 and 2, the grooves need to be formed in a relatively wide region as indicated by arrows A in FIG. 14 to ensure a capacity for holding the alignment film material. As a result, a distance between the pixel region and the sealing member region increases, and a frame-shaped non-display region formed around the pixel region cannot easily be narrowed.

According to Patent Document 3, the ink is held in the recessed grooves formed by the plurality of banks. The banks require water repellency, and the rough and smooth surfaces need to be provided on the side surface of each bank. Thus, this method is susceptible to improvement to reduce the number of steps and fabrication costs.

In view of the foregoing, the present invention has been achieved. The present invention is concerned with reducing the spread of the alignment film material, while narrowing the non-display region of the liquid crystal display device as much as possible.

### SOLUTION TO THE PROBLEM

In view of the above concern, the present invention is directed to a liquid crystal display device including: a first substrate; a second substrate facing the first substrate; a liquid crystal layer provided between the first substrate and the second substrate; and a sealing member provided between the first substrate and the second substrate to surround and seal the liquid crystal layer.

Each of the first substrate and the second substrate includes a pixel region as a display region, and a frame region as a non-display region which surrounds the pixel region and includes a sealing member region for forming the sealing member, alignment films, each extending from the pixel region to the frame region, are formed on a surface of the first substrate facing the liquid crystal layer and a surface of the second substrate facing the liquid crystal layer, respectively, by curing an alignment film material having fluidity, at least one of the first substrate or the second substrate includes a support substrate, and a support structure formed on the support substrate, at least a surface of the support structure opposite the support substrate being directly covered with the alignment film, the support structure has a side portion which is formed in such a manner that a tangent plane on the side portion is inclined outward relative to the support structure toward the support substrate, and the side portion of the support structure is located in the frame region, and supports an edge of the alignment film.

### -Effects-

Effects of the present invention will be described below.

In fabricating the liquid crystal display device according to the present invention, the alignment film before curing spreads from the pixel region to the frame region. Then, the edge of the alignment film reaches the frame region. In the present invention, at least one of the first and second substrates has the support structure formed on the support substrate. The side portion of the support structure is located in the frame region.

The alignment film is supported on at least a surface of the support structure opposite the support substrate, and the edge of the alignment film is supported on the side portion of the support structure. Specifically, the side portion of the support structure is formed in such a manner that a tangent plane on the side portion is inclined outward relative to the support structure toward the support substrate. Thus, the edge of the alignment film having viscosity can be supported on the side portion.

This eliminates the need to form a groove for holding the alignment film material between the side portion of the support structure and the plurality of terminals on the first substrate. Thus, the non-display region of the liquid crystal display device can greatly be narrowed, and the spread of the alignment film material can be reduced.

### ADVANTAGES OF THE INVENTION

According to the present invention, there is no need to form the groove for holding a resin material for forming the alignment film closer to the terminal region than to the side portion of the support structure. Thus, the non-display region of the liquid crystal display device can greatly be narrowed, and the spread of the alignment film material can be reduced.

### BRIEF DESCRIPTION OF THE DRAWINGS

[FIG. 1] FIG. 1 is an enlarged plan view showing part of a TFT substrate of a first embodiment of the present invention.
[FIG. 2] FIG. 2 is a cross-sectional view taken along the line II-II in FIG. 1.
[FIG. 3] FIG. 3 is a cross-sectional view taken along the line III-III in FIG. 1.
[FIG. 4] FIG. 4 is a plan view showing a schematic structure of a liquid crystal display device of the first embodiment.
[FIG. 5] FIG. 5 is an enlarged plan view showing part of a counter substrate of the first embodiment.
[FIG. 6] FIG. 6 is a cross-sectional view taken along the line VI-VI in FIG. 5.
[FIG. 7] FIG. 7 is a view corresponding a cross-sectional view taken along the line VII-VII in FIG. 4.
[FIG. 8] FIG. 8 is an enlarged cross-sectional view of a support structure on the TFT substrate.
[FIG. 9] FIG. 9 is an enlarged plan view of part of the TFT substrate.
[FIG. 10] FIG. 10 is an enlarged cross-sectional view of a TFT substrate of a second embodiment.
[FIG. 11] FIG. 11 is an enlarged cross-sectional view of a TFT substrate of a third embodiment.
[FIG. 12] FIG. 12 is an enlarged plan view of part of a TFT substrate of another embodiment.
[FIG. 13] FIG. 13 is an enlarged plan view of part of a TFT substrate of still another embodiment.
[FIG. 14] FIG. 14 is an enlarged cross-sectional view of a conventional TFT substrate.
[FIG. 15] FIG. 15 is an enlarged cross-sectional view of ink of a color filter on a conventional counter substrate.

### DESCRIPTION OF EMBODIMENTS

Embodiments of the present invention will be described in detail with reference to the drawings. The present invention is not limited to the following embodiments.

### [First Embodiment of the Invention]

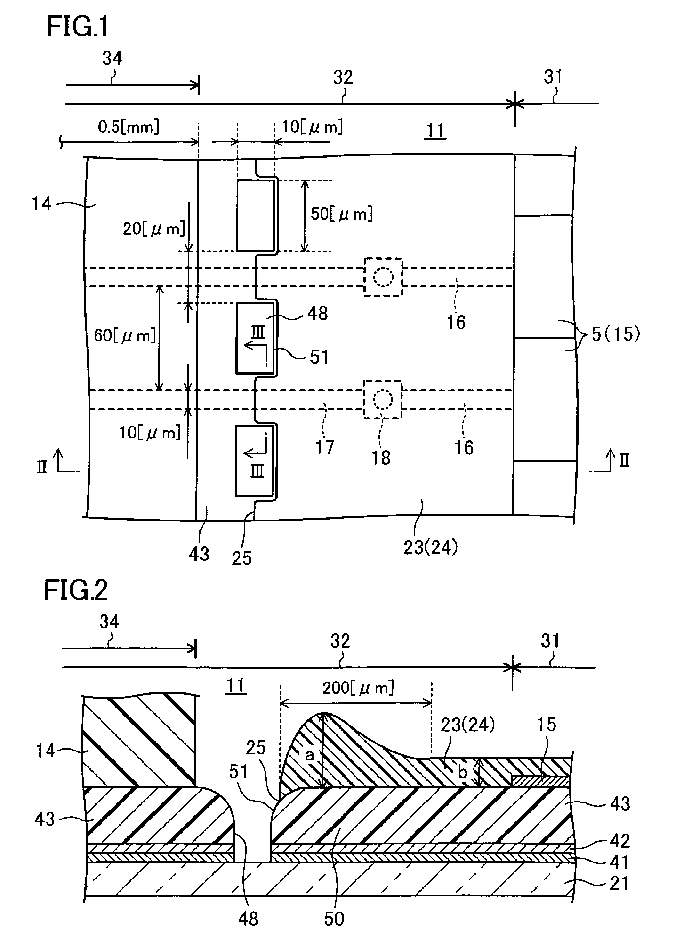

FIGS. 1-6 show a first embodiment of the present invention.

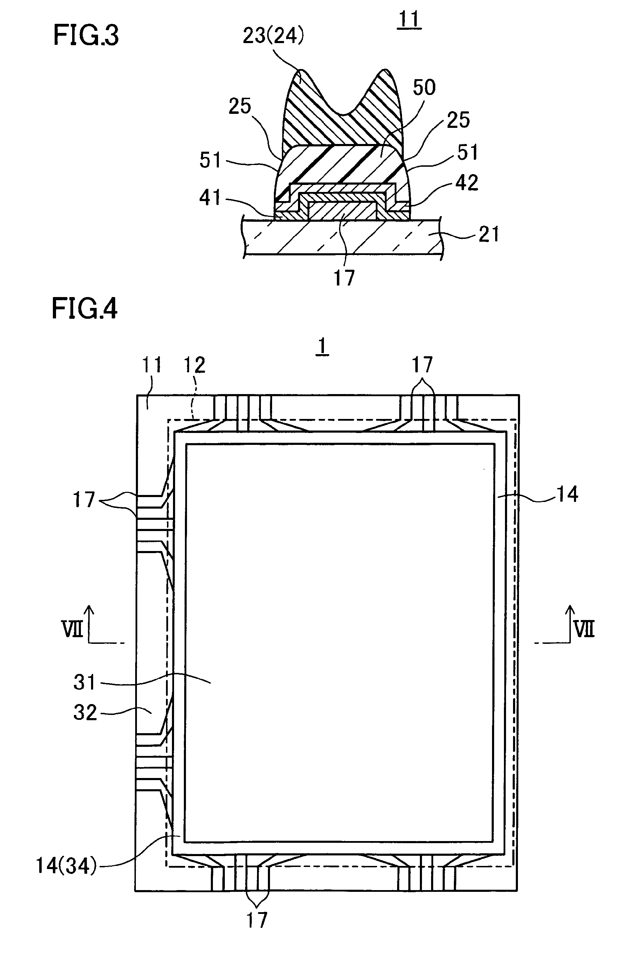

FIG. 1 is an enlarged plan view of part of a TFT substrate 11 of the first embodiment. FIG. 2 is a cross-sectional view taken along the line II-II in FIG. 1. FIG. 3 is a cross-sectional view taken along the line III-III in FIG. 1. FIG. 4 is a plan view showing a schematic structure of a liquid crystal display device 1 of the first embodiment.

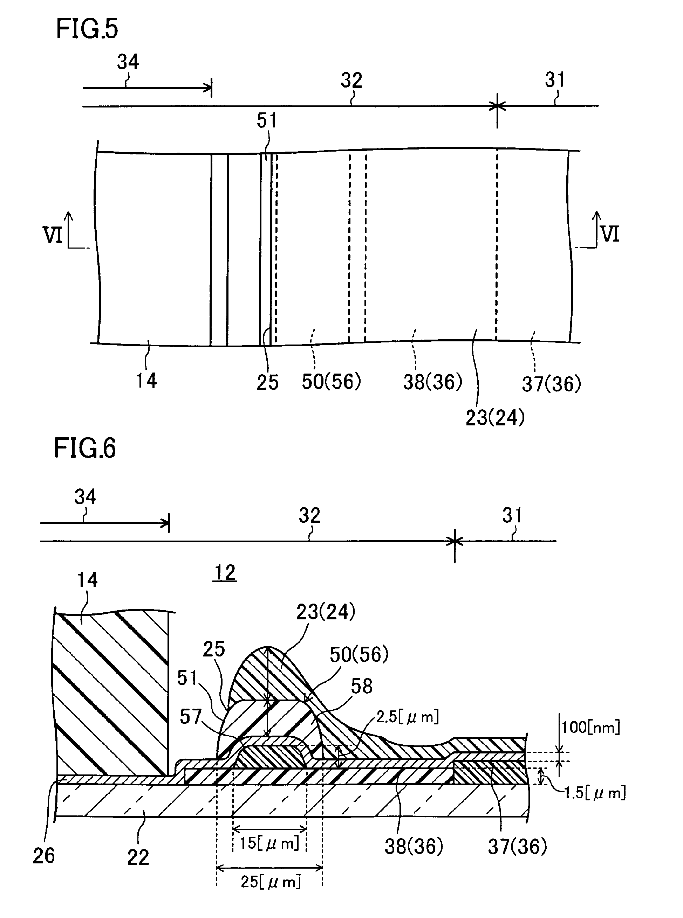

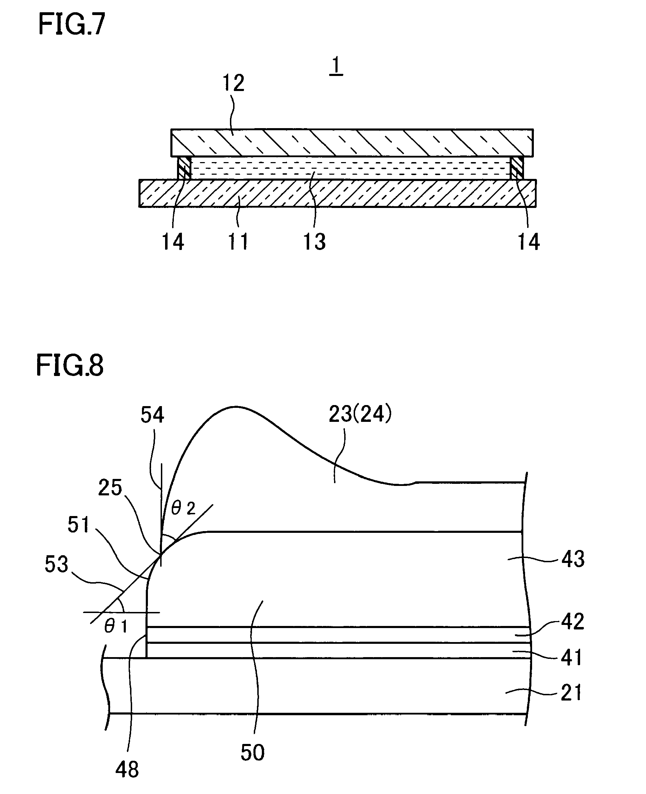

FIG. 5 is an enlarged plan view of part of a counter substrate 12 of the first embodiment. FIG. 6 is a cross-sectional view taken along the line VI-VI in FIG. 5. FIG. 7 is a view corresponding to a cross-sectional view taken along the line VII-VII in FIG. 4. FIG. 8 is an enlarged cross-sectional view of a support structure 50 on the TFT substrate 11.

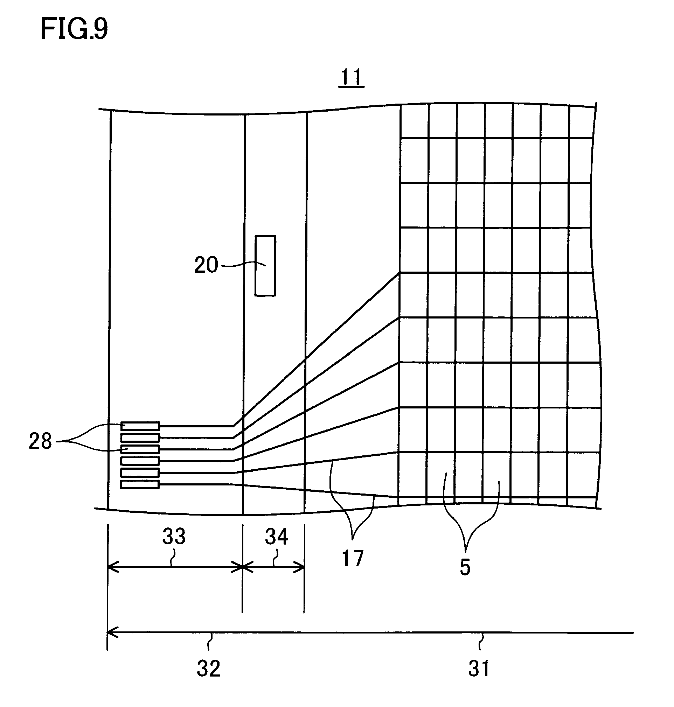

FIG. 9 is an enlarged plan view of part of the TFT substrate 11. FIG. 9 does not show an alignment film 23 and recesses 48 described later.

The liquid crystal display device 1 includes, as shown in FIGS. 4 and 7, a TFT substrate 11 as a first substrate, a counter substrate 12 as a second substrate facing the TFT substrate 11, and a liquid crystal layer 13 provided between the TFT substrate 11 and the counter substrate 12.

The liquid crystal display device 1 further includes a sealing member 14 provided between the TFT substrate 11 and the counter substrate 12 to surround and seal the liquid crystal layer 13. The sealing member 14 is substantially in the form of a rectangular frame as shown in FIG. 4, and is made of a UV/thermally curable resin, such as an acrylic or epoxy-based resin. A plurality of conductive particles (not shown) are dispersed and mixed in the sealing member 14. A line width of the sealing member 14 is about 0.5 mm-2.5 mm, for example.

Each of the TFT substrate 11 and the counter substrate 12 has a pixel region 31 as a display region, and a frame region 32 as a non-display region surrounding the pixel region 31. The frame region 32 includes a sealing member region 34 (a region for forming the sealing member 14) provided with a predetermined distance from the pixel region 31.

Alignment films 23, each extending from the pixel region 31 to the sealing member region 14, are formed on a surface of the TFT substrate 11 facing the liquid crystal layer 13 and a surface of the counter substrate 12 facing the liquid crystal layer 13, respectively, by curing an alignment film material 24 having fluidity.

The alignment film 23 is made of a resin material such as polyimide, and controls initial orientation of liquid crystal molecules in the liquid crystal layer 13. The alignment film material 24 has a viscosity reduced by adding a solvent to polyimide etc. The alignment film material 24 may be, for example, a vertical alignment film material having a viscosity of 6.5 mPa·s manufactured by JSR Corporation.

### (TFT Substrate)

In the frame region 32 on the TFT substrate 11, a terminal region 33 which is located opposite the pixel region 31 relative to the sealing member region 34 is formed as shown in FIG. 9. A plurality of terminals 28 for supplying signals to the pixel region 31 are formed in the terminal region 33. The terminal region 33 is formed in an edge region of the TFT substrate 11 as shown in FIG. 4.

A plurality of pads 20 made of a transparent conductive film, such as an indium tin oxide (ITO) film, are formed as an electrode portion on a surface of an interlayer insulating film 43 in the sealing member region 34 on the TFT substrate 11 as shown in FIG. 9. The pads 20 have a thickness of about 100 nm, and are arranged at predetermined intervals on the sealing member 14. The pads 20 are electrically connected to a common electrode 26 on the counter substrate 12 through the conductive particles in the sealing member 14.

A plurality of pixels 5 are arranged in a matrix pattern in the pixel region 31 of the TFT substrate 11. A pixel electrode 15 made of a transparent conductive film, such as an ITO film, is formed in each of the pixels 5. A thin-film transistor (TFT, not shown) as a switching element connected to the pixel electrode 15 is formed in each of the pixels 5. Gate lines (not shown) and source lines 16 connected to the TFTs are formed on the TFT substrate 11.

The TFT substrate 11 has a glass substrate 21 as a support substrate as shown in FIG. 2, and a gate insulating film 41 covering the gate lines (not shown) is formed on a surface of the glass substrate 21 facing the liquid crystal layer 13. As shown in FIGS. 1, 4, and 9, a plurality of lead lines 17 made of the same material as the gate lines are formed in the frame region 32 on the glass substrate 21. A line width of the lead line 17 is about 10 µm. A distance between the adjacent lead lines 17 in the sealing member region 34 is about 60 µm. Terminals 28 are provided at ends of the lead lines 17, respectively.

The source lines 16 are connected to the lead lines 17 through contacts 18, respectively. The gate insulating film 41 is made of an oxide film, such as a SiN or SiO₂ film, and has a thickness of about 0.4 µm.

A passivation film 42 as a protective film is formed on a surface of the gate insulating film 41. The passivation film 42 is made of an inorganic film, such as a SiN film, and has a thickness of about 0.25 µm.

A passivation film 42, and a planarization film 43 which is an insulating film covering the passivation film are formed on the surface of the TFT substrate 11 on which the source lines 16 are formed. The planarization film 43 is made of a photosetting acrylic resin, for example, and has a thickness of about 2.5 µm.

The plurality of pixel electrodes 15 are formed on a surface of the planarization film 43 in the pixel region 31. The sealing member 14 is formed on the surface of the planarization film 43 in the sealing member region 34.

Part of the planarization film 43 constitutes a support structure 50 for supporting the alignment film 23 or the alignment film material 24. That is, the support structure 50 is formed on the TFT substrate 11 with at least a surface of the support structure 50 opposite the glass substrate 21 being directly covered with the alignment film 23.

A plurality of recesses 48 are formed at predetermined intervals along the sealing member 14 to penetrate the gate insulating film 41, the passivation film 42, and the planarization film 43 stacked on the glass substrate 21 as shown in FIGS. 1 and 2. The interval between the adjacent recesses 48 is 50 µm or less. In the first embodiment, the interval between the recesses 48 is about 20 µm, for example.

As shown in FIG. 1, the recesses 48 are formed in regions where the lead lines 17 are not provided. Each of the recesses 48 is in the shape of a rectangle when viewed in a direction normal to the substrate as shown in FIG. 1. The recess 48 has a longitudinal dimension of about 50 µm parallel to the sealing member 14, and a horizontal dimension of about 10 µm. The recesses 48 may be formed by photolithography and etching.

The planarization film 43 in which the plurality of recesses 48 are formed constitutes the support structure 50, and part of an inner wall surface of the recess 48 constitutes a side portion 51 of the support structure 50.

As shown in FIG. 8, the side portion 51 of the support structure 50 is formed in such a manner that a tangent plane 53 in contact with a surface of the side portion 51 is inclined outward relative to the support structure 50 toward the glass substrate 21 (i.e., toward the sealing member region 34 on the left in FIG. 8). The side portion 51 of the support structure 50 is located between the pixel region 31 and the plurality of terminals 28 (in particular, between the pixel region 31 and the sealing member region 34 in the present embodiment), and supports an edge 25 of the alignment film 23 or the alignment film material 24.

The tangent plane 53 on the side portion 51 at the edge 25 of the alignment film 23 or the alignment film material 24 and the surface of the glass substrate 21 form an angle θ1, and a tangent plane 54 on a surface of the edge 25 of the alignment film 23 at the edge 25 of the alignment film 23 and the tangent plane 53 forms an angle θ2.

The tangent plane 53 on the side portion 51 is inclined at the angle 61. Thus, the alignment film material 24 spread from the pixel region 31 can be stopped on the side portion 51 at the angle θ2. As a result, the alignment film 23 or the alignment film material 24 bulges toward the liquid crystal layer 13 near the side portion 51 of the support structure 50.

As shown in FIG. 2, the alignment film 23 or the alignment film material 24 bulges in a width of about 200 µm. Thickness a of the bulging part of the alignment film material 24 is about several µm, and thickness a of the bulging part of the cured alignment film 23 is about 1 µm. Thickness b of a flat part of the alignment film material 24 in the pixel region 31 is about several µm, and thickness b of the flat part of the cured alignment film 23 in the pixel region 31 is about 0.1 µm.

As described above, the plurality of recesses 48 are formed in the planarization film 43 at the predetermined intervals. Thus, the side portion 51 of the support structure 50 is formed not only by the inner wall surface of the recess 48 closer to the pixel region 31, but also by parts of inner wall surfaces of the recess 48 on the left and right in a direction of the flow of the alignment film material. Specifically, part of the side portion 51 of the support structure 50 is in the shape of U when viewed in a direction normal to the substrate. As shown in FIGS. 1-3, the alignment film 23 bulges along the U-shaped side portion 51. Thus, the edge 25 of the alignment film 23 is in the corrugated form along the side portion 51 when viewed in the direction normal to the substrate as shown in FIG. 1.

### (Counter Substrate)

The counter substrate 12 has a glass substrate 22 as a support substrate as shown in FIGS. 5 and 6. A plurality of color layers 37 constituting a color filter 36, and a black matrix 38 as a light shield film are formed on a surface of the glass substrate 22 facing the liquid crystal layer 13. The black matrix 38 is about 1.5 µm in thickness. A common electrode 26 made of a transparent conductive film, such as an ITO film, and is about 100 nm in thickness, is formed on the surface of the glass substrate 22 on which the color filter and the black matrix are formed.

The color layers 37 are filters each transmitting red (R), green (G), or blue (B) light, and are arranged in a matrix pattern in the pixel region 31 on the counter substrate 12. The black matrix 38 blocks light transmission through a region between the adjacent color layers 37, and blocks light transmission through the frame region 32. The sealing member 14 is the same as that formed on the TFT substrate 11, and is arranged in the sealing member region 34 in the frame region 32.

An alignment film 23 extending from the pixel region 31 to the sealing member region 34 is formed on a surface of the counter substrate 12 facing the liquid crystal layer 13 by curing the same alignment film material 24 as that provided on the TFT substrate 11.

A support structure 50 is also formed on the counter substrate 12 like that on the TFT substrate 11. The support structure 50 is made of a ridge portion 56 provided near the sealing member region 34 and extends in the shape of a rib along the sealing member 14.

The ridge portion 36 includes a base 57 made of the same material as the blue color layer 37, for example, and a coating 58 which covers the base 57. The coating 58 is made of a photosensitive acrylic resin, which is the same material as a rib (not shown) or a photospacer (not shown) formed on the counter substrate 12 to align the liquid crystal molecules in vertical orientation.

The support structure 50 on the counter substrate 12 has a side portion 51 same as that of the support structure 50 on the TFT substrate 11. The side portion 51 of the support structure 50 on the counter substrate 12 is also located between the pixel region 31 and the sealing member region 34. An edge 25 of the alignment film 23 or the alignment film material 24 is supported on the side portion 51.

As shown in FIG. 6, the base 57 has a thickness of about 2.5 µm, and a width of about 15 µm. The coating 58 on the base 57 has a thickness of about 3.8 µm, and a width of about 25 µm.

Part of the alignment film material 24 on the support structure 50 bulging toward the liquid crystal layer 13 is about several µm in thickness, and the bulging part of the cured alignment film 23 is about 1 µm in thickness. In the pixel region 31, the alignment film material 24 is about several µm in thickness, and the cured alignment film 23 is about 0.1 µm in thickness.

### -Fabrication Method-

A method for fabricating the liquid crystal display device 1 will be described below.

The method for fabricating the liquid crystal display device 1 includes a first step of forming the TFT substrate 11 and the counter substrate 12, and a second step of forming the frame-shaped sealing member 14 on the frame region 32 of the TFT substrate 11 or the counter substrate 12, dropping liquid crystal inside the sealing member 14, and bonding the TFT substrate 11 and the counter substrate 12.

The first step includes a step of forming the support structure 50 on the glass substrate 21, 22 constituting the TFT substrate 11 or the counter substrate 12, and a step of forming the alignment film 23 by spreading the alignment film material 24 having fluidity from the pixel region 31 to the frame region 32 to cure the alignment film material 24 with at least a surface of the support structure 50 opposite the glass substrate 21, 22 directly covered with the alignment film material 24.

In fabricating the TFT substrate 11, gate lines (not shown), a gate insulating film 41, a silicon film (not shown), source lines 16, a passivation film 42, a planarization film 43, an ITO film, etc., are formed on a surface of the glass substrate 21 which is a transparent substrate.

The planarization film 43 can be made of a photosensitive organic material such as a photosetting acrylic resin, or a non-photosensitive insulating film. When the photosensitive organic material is used, the organic material is applied to the glass substrate 21 to form a flat surface by spin coating (slit coating, or ink jet printing may be available).

Then, a plurality of recesses 48 penetrating the planarization film 43, the passivation film 42, and the gate insulating film 41 are formed by photolithography and etching. When a metal layer is not formed as an underlying layer, the glass substrate 21 is exposed in the recess 48. Thus, a support structure 50 is formed as part of the planarization film 43. A side portion 51 of the support structure 50 formed by the provision of the recess 48 is located in the frame region 32, and a tangent plane 53 on the side portion 51 is inclined outward relative to the support structure 50 toward the glass substrate 21.

When the non-photosensitive insulating film is used to form the planarization film 43, an insulating material layer of a uniform thickness is formed on the glass substrate 21 by, for example, CVD (sputtering, or applying an applicable material may be available), and a photosensitive resist is applied to the entire surface of the insulating material layer. Then, a predetermined resist pattern is formed by photolithography. Then, the insulating material layer is etched (by wet or dry etching), and the resist pattern is removed, thereby forming the plurality of recesses 48.

Then, an ITO layer is formed on a surface of the planarization film 43, and is patterned by photolithography and etching to form a plurality of pixel electrodes 15. Then, an alignment film material 24 having fluidity, such as polyimide, is supplied onto the pixel region 31 by ink jet printing to cover the pixel electrodes 15 etc.

When the alignment film material 24 flowing from the pixel region 31 to the frame region 32 reaches the side portion 51 of the support structure 50, an edge 25 of the alignment film material 24 is supported on the side portion 51. Thus, as shown in FIG. 2, the alignment film material 24 bulges toward the liquid crystal layer 13 near the side portion 51 of the support structure 50, thereby stopping the flow of the alignment film material. Then, the alignment film material 24 is baked to form an alignment film 23.

In fabricating the counter substrate 12, a common electrode 26 and a color filter 36 are formed on a surface of a glass substrate 22 which is a transparent substrate. In forming color layers 37 of the color filter 36, a base 57 is simultaneously formed on a surface of the black matrix 38 in the frame region 32 with the same material as the color layers 37.

Then, a coating 58 covering the base 57, and a photospacer (not shown) or a rib for aligning the liquid crystal molecules in vertical orientation are simultaneously formed by depositing a photosensitive acrylic resin to cover the base 57 and the color filter 36, and performing photolithography and etching on the deposited resin.

Then, the alignment film material 24 having fluidity, such as polyimide, is supplied onto the pixel region 31 by ink jet printing to cover the color filter 36 etc.

When the alignment film material 24 flowing from the pixel region 31 to the frame region 32 reaches the side portion 51 of the support structure 50, the edge 25 of the alignment film material 24 is supported on the side portion 51. As a result, the alignment film material 24 bulges toward the liquid crystal layer 13 near the side portion 51 of the support structure 50 as shown in FIG. 6, thereby stopping the flow of the alignment film material. Then, the alignment film material 24 is baked to form the alignment film 23.

### -Advantages of First Embodiment-

According to the first embodiment, each of the TFT substrate 11 and the counter substrate 12 is provided with the support structure 50 for supporting the alignment film 23 (the alignment film material 24), and the support structure 50 has the side portion 51 on which the tangent plane 53 is inclined outward relative to the support structure 50 toward the glass substrate 21, 22. Thus, the alignment film 23 (the alignment film material 24) can be supported on a surface of the support structure 50 opposite the glass substrate 21, 22, and the edge 25 of the alignment film 23 (the alignment film material 24) can be supported on the side portion 51 of the support structure 50 even when the viscosity of the alignment film material 24 is relatively low.

Thus, an excess of the alignment film material 24 can be held on part of the side portion 51 of the support structure 50 closer to the liquid crystal layer 13. Accordingly, there is no need to form a groove for holding the alignment film material 24 closer to the sealing member region 34 than the side portion 51 of the support structure 50. Thus, the frame region 32 of the liquid crystal display device 1 can greatly be narrowed, and the sealing member 14 and the alignment film material 24 can be prevented from overlapping each other.

Since the side portion 51 of the support structure 50 is formed by part of the inner wall surface of the recess 48 formed in the planarization film 43, the side portion 51 can easily be formed by patterning the planarization film 43. In addition, as shown in FIG. 1, the side portions 51 of the plurality of recesses 48 adjacent to each other can cooperatively prevent the alignment film material 24 from flowing toward the sealing member region 34.

In particular, since the interval between the recesses 48 is 50 µm or less, the flow of the alignment film material 24 toward the sealing member region 34 through a region between the recesses 48 can surely be prevented. When the interval between the recesses 48 is larger than 50 µm, the alignment film material 24 may flow through the region between the recesses 48. Thus, the interval is preferably 50 µm or less. The interval between the recesses 48 is preferably 0 µm or more. Specifically, when wirings are not formed below, the recesses 48 are preferably connected to form a continuous recess. The continuous recess can stop the flow of the alignment film material 24 more effectively upstream of the recesses 48 (in the pixel region 31) than the recesses 48 adjacent to each other.

Since the support structure 50 is made of the photosetting acrylic resin, a thickness and an angle of inclination of the side portion 51 can easily be controlled.

The support structure 50 is made of the insulating film formed on the TFT substrate 11 or the counter substrate 12 (the planarization film 43 on the TFT substrate 11 or the photospacer or rib on the counter substrate 12 for aligning the liquid crystal molecules in vertical orientation). Thus, the support structure 50 can simultaneously be formed in the general step of forming the TFT substrate 11 or the counter substrate 12. This can reduce increase in fabrication costs.

Part of the support structure 50 on the counter substrate 12 is made of the color layer 37 of the color filter 36. Thus, the part of the support structure 50 can be formed in the step of forming the color filter 36. This can reduce the fabrication costs.

### [Second Embodiment of the Invention]

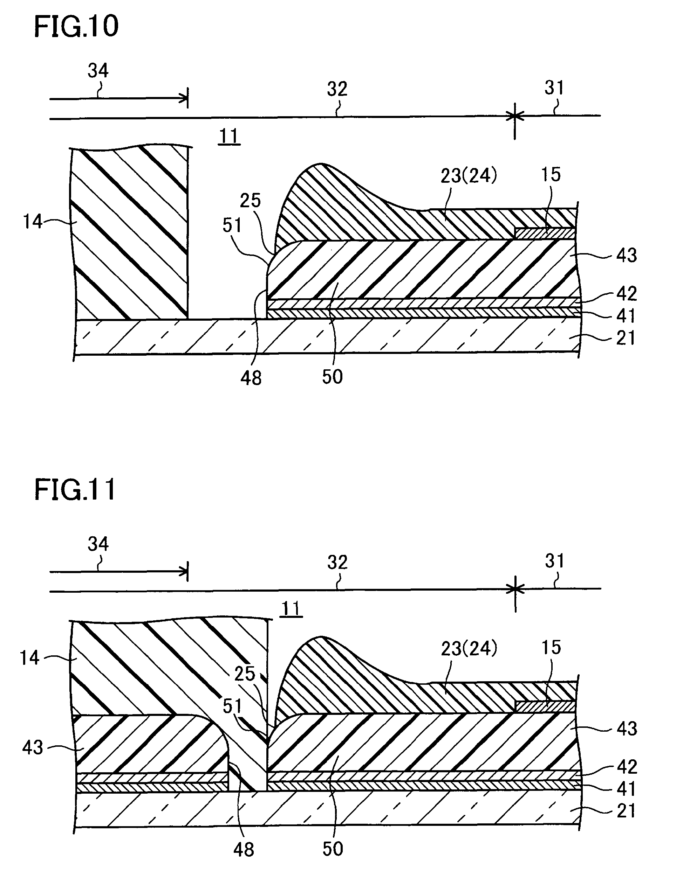

FIG. 10 shows a second embodiment of the present invention.

FIG. 10 is an enlarged cross-sectional view of a TFT substrate 11 of the second embodiment. In the following embodiments, the same components as those shown in FIGS. 1-8 will be indicated by the same reference characters to omit detailed description thereof.

In the first embodiment, the planarization film 43 is formed in the sealing member region 34. In the second embodiment, however, the sealing member 14 is formed on the glass substrate 21 without the planarization film 43 constituting the support substrate 50 interposed between the sealing member and the glass substrate.

Specifically, in the sealing member region 34 on the TFT substrate 11, the gate insulating film 41, the passivation film 42, and the planarization film 43 are removed by etching etc. from the glass substrate 21. The sealing member 14 is directly formed on a surface of the glass substrate 21.

Thus, according to the second embodiment, advantages similar to those of the first embodiment can be obtained because the alignment film material 24 bulges toward the liquid crystal layer 13, and is supported on the side portion 51 of the support structure 50. In addition, even when the material of the support structure 50 has a water absorbing property, such as a photosetting acrylic resin, the material is not provided between the sealing member 14 and the glass substrate 21. Thus, outside air is prevented from passing between the sealing member 14 and the glass substrate 21 to enter the liquid crystal layer 13, thereby improving reliability of the liquid crystal display device.

### [Third Embodiment of the Invention]

FIG. 11 shows a third embodiment of the present invention.

FIG. 11 is an enlarged cross-sectional view of a TFT substrate of the third embodiment.

In the first embodiment, the plurality of recesses 48 are formed with a predetermined distance from the sealing member 14. In the third embodiment, however, the sealing member 14 is also formed in each of the recesses 48. Specifically, the sealing member 14 is in contact with an end of the support structure 50 with a gap provided between the sealing member 14 and the edge 25 of the alignment film 23 (the alignment film material 24).

The support structure 50 is provided also in the third embodiment. Thus, advantages similar to those of the first embodiment can be obtained. In addition, since the sealing member 14 is in contact with the end of the support structure 50 with the gap provided between the sealing member 14 and the edge 25 of the alignment film 23 (the alignment film material 24), the frame region 32 can be formed narrower. In forming the sealing member 14, the sealing member 14 is held in the recesses 48. Thus, the shape of the sealing member 14 can easily be controlled. In addition, the sealing member 14 formed in the recesses 48 can prevent outside air from entering the liquid crystal layer 13.

### [Other Embodiments]

In the first to third embodiments, the support structure 50 is formed on each of the TFT substrate 11 and the counter substrate 12. However, the present invention is not limited to this example, and the support structure 50 may be formed on at least one of the TFT substrate 11 or the counter substrate 12.

In the first to third embodiments, the side portion 51 of the support structure 50 on the TFT substrate 11 is located between the pixel region 31 and the sealing member region 34. However, the present invention is not limited to this example, and the side portion 51 may be located in a different part of the frame region 32.

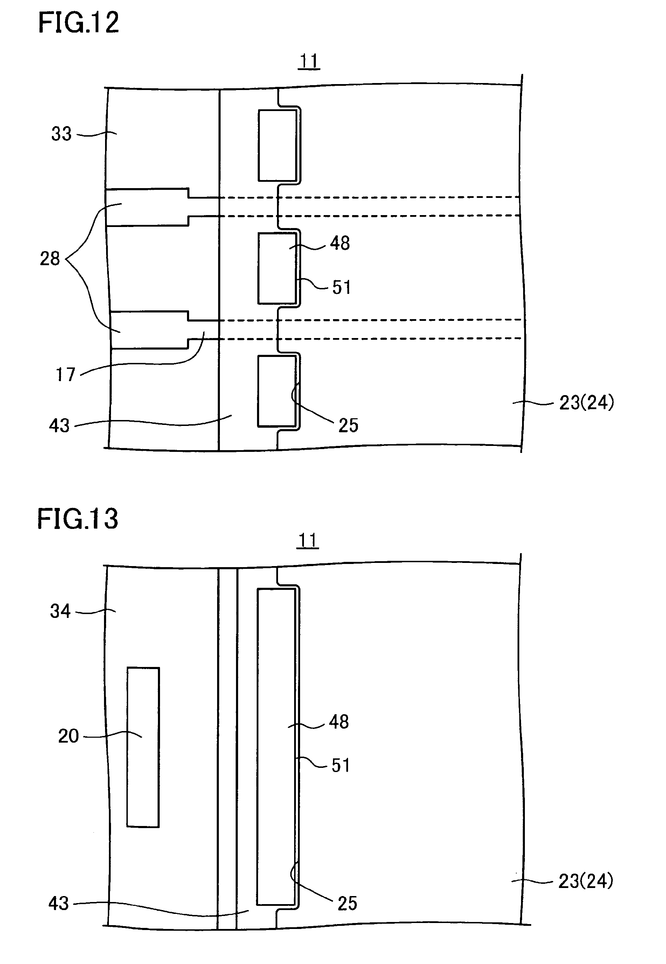

FIGS. 12 and 13 are enlarged plan views of part of a TFT substrate of the other embodiments.

As shown in FIG. 12, the recesses 48 may be provided between the pixel region 31 and the plurality of terminals 28 to be closer to the terminals 28 than to the pixel region 31. In this configuration, the edge 25 of the alignment film material 24 can be supported on the side portion 51 of the support structure 50. Thus, the frame region 32 can be narrowed, the spread of the alignment film material 24 can be reduced, and the plurality of terminals 28 can be exposed from the alignment film 23. Therefore, the plurality of terminals 28 and drive circuit chips mounted thereon can surely be conducted to each other.

As shown in FIG. 13, the recesses 48 may be provided between the pixel region 31 and the pads 20 and between the pixel region 31 and the sealing member region 34. The recesses 48 are located in the sealing member region 34 to be closer to the pixel region 31. In a region where the lead lines 17 are not provided, the recesses 48 may be connected to form a recess 48 elongated along the sealing member region 34.

In this configuration, as described above, the frame region 32 can be narrowed, the spread of the alignment film material 24 can be reduced, and the sealing member 14 and the alignment film material 24 can be prevented from overlapping each other. This can maintain suitable adhesion between the sealing member 14 and the TFT substrate 11 or the counter substrate 12, thereby preventing the outside air from entering the liquid crystal layer 13 through an interface between the sealing member 14 and the TFT substrate 11 or the counter substrate 12.

Since the sealing member region 34 is exposed from the alignment film material 24, the sealing member 14 formed in the sealing member region 34 can be shaped with improved precision even when the alignment film material 24 is water repellent. In addition, since the pads 20 can be exposed from the alignment film 23, the pads 20 and the conductive particles contained in the sealing member 14 can surely be conducted. The side portion of the support structure formed on the counter substrate 12 may be located between the pixel region 31 and a region on the counter substrate 12 facing the pads 20. Thus, the common electrode 26 in the region on the counter substrate 12 facing the pad 20 can surely be electrically connected with the conductive particles. This can ensure electrical connection between the TFT substrate 11 and the counter substrate 12.

The recesses 48 may be arranged between the pixel region 31 and the pads 20 to be closer to the pads 20 than to the pixel region 31. Specifically, the pads 20 are exposed from the alignment film material 24, while the alignment film material 24 partially overlaps with the sealing member region 34. In this configuration, the pads 20 can be exposed from the alignment film 23.

### INDUSTRIAL APPLICABILITY

As described above, the present invention is useful for a liquid crystal display device and a method for fabricating the same.

### DESCRIPTION OF REFERENCE CHARACTERS

- 1: Liquid crystal display device
- 11: TFT substrate (first substrate)
- 12: Counter substrate (second substrate)
- 13: Liquid crystal layer
- 14: Sealing member
- 20: Pad (electrode portion)
- 21, 22: Glass substrate (support substrate)
- 23: Alignment film
- 24: Alignment film material
- 25: Edge
- 28: Terminal
- 31: Pixel region
- 32: Frame region
- 33: Terminal region
- 34: Sealing member region
- 36: Color filter
- 37: Color layer
- 38: Black matrix
- 43: Planarization film
- 48: Recess
- 50: Support structure
- 51: Side portion
- 53, 54: Tangent plane
- 56: Ridge portion
- 57: Base
- 58: Coating

## Claims

1. A liquid crystal display device, comprising:
a first substrate;
a second substrate facing the first substrate;
a liquid crystal layer provided between the first substrate and the second substrate; and
a sealing member provided between the first substrate and the second substrate to surround and seal the liquid crystal layer, wherein
each of the first substrate and the second substrate includes a pixel region as a display region, and a frame region as a non-display region which surrounds the pixel region and includes a sealing member region for forming the sealing member,
alignment films, each extending from the pixel region to the frame region, are formed on a surface of the first substrate facing the liquid crystal layer and a surface of the second substrate facing the liquid crystal layer, respectively, by curing an alignment film material having fluidity,
at least one of the first substrate or the second substrate includes a support substrate, and a support structure formed on the support substrate, at least a surface of the support structure opposite the support substrate being directly covered with the alignment film,
the support structure has a side portion which is formed in such a manner that a tangent plane on the side portion is inclined outward relative to the support structure toward the support substrate, and
the side portion of the support structure is located in the frame region, and supports an edge of the alignment film.

2. The liquid crystal display device of claim 1, wherein
the frame region on the first substrate includes a terminal region which is located opposite the pixel region relative to the sealing member region, and in which a plurality of terminals for supplying a signal to the pixel region are formed, and
the side portion of the support structure formed on the first substrate is located between the pixel region and the plurality of terminals.

3. The liquid crystal display device of claim 1, wherein
an electrode portion for electrically connecting the first substrate and the second substrate is formed in the sealing member region on the first substrate, and
the side portion of the support structure is located between the pixel region and the electrode portion.

4. The liquid crystal display device of claim 3, wherein
the side portion of the support structure formed on the second substrate is located between the pixel region and a region facing the electrode portion.

5. The liquid crystal display device of claim 1, wherein
the side portion of the support structure is located between the pixel region and the sealing member region.

6. The liquid crystal display device of any one of claims 1-5, wherein
the alignment film bulges toward the liquid crystal layer near the side portion of the support structure.

7. The liquid crystal display device of any one of claims 1-6, wherein
the support structure is made of an insulating film in which a plurality of recesses are formed at predetermined intervals along the sealing member, and
the side portion of the support structure is formed by part of an inner wall surface of each of the recesses.

8. The liquid crystal display device of claim 7, wherein
the interval between the adjacent recesses is 0 µm to 50 µm, both inclusive.

9. The liquid crystal display device of any one of claims 1-8, wherein
the support structure is made of a photosetting resin.

10. The liquid crystal display device of any one of claims 1-9, wherein
the support structure formed on the first substrate is made of a planarization film formed on the first substrate.

11. The liquid crystal display device of any one of claims 1-10, wherein
the second substrate is a counter substrate including a color filter, and
the support structure formed on the second substrate is made of a ridge portion including a material for forming the color filter.

12. The liquid crystal display device of claim 1, 2, 3, 4, 5, 6, 9, 10, or 11, wherein
the sealing member is directly formed on the support substrate without a material for forming the support structure interposed therebetween.

13. The liquid crystal display device of any one of claims 1-12, wherein
the sealing member is in contact with an end of the support structure with a gap provided between the sealing member and the edge of the alignment film.

14. A method for fabricating a liquid crystal display device, the method comprising:
a first step of forming a first substrate and a second substrate each including a pixel region as a display region, and a frame region as a non-display region which surrounds the pixel region, and
a second step of forming a frame-shaped sealing member on the frame region of the first substrate or the second substrate, supplying liquid crystal inside the sealing member, and bonding the first substrate and the second substrate to each other, wherein
the first step includes
forming a support structure on a support substrate constituting the first substrate or the second substrate, and
spreading an alignment film material having fluidity from the pixel region to the frame region to cure the alignment film material with at least a surface of the support structure opposite the support substrate directly covered with the alignment film material,
in the forming of the support structure, the support structure is formed so that a side portion of the support structure is located in the frame region, and a tangent plane on the side portion is inclined outward relative to the support structure toward the support substrate, and
in the forming of the alignment film, an edge of the alignment film material is supported on the side portion of the support structure.

15. The method of claim 14, wherein
in the forming of the support structure, the side portion is located between the pixel region and the sealing member region.

16. The method of claim 14 or 15, wherein
the support structure is made of an insulating film in which a plurality of recesses are formed at predetermined intervals along the sealing member, and
the side portion of the support structure is formed by part of an inner wall surface of each of the recesses.

17. The method of any one of claims 14-16, wherein
the second substrate is a counter substrate including a color filter, and
the support structure formed on the second substrate is formed by a ridge portion including a material for forming the color filter.
